# EUROPÄISCHE PATENTANMELDUNG

(11) **EP 1 431 107 A2**
(43) Veröffentlichungstag der Anmeldung: **23.06.2004**
(21) Anmeldenummer: 03029273.4
(22) Anmeldetag: 22.12.2003
(51) Int. Cl.: B60N 2/46, B60N 3/00, B60N 3/10, B60R 11/02

(54) **Multifunktionsbox zur lösbaren Befestigung im Innenraum eines Fahrzeuges**

(30) Priorität: 21.12.2002 DE 10260502
(71) Anmelder: ADAM OPEL AG, 65423 Rüsselsheim (DE); Lear Corporation, Southfield, MI 48034 (US)
(72) Erfinder: Lindström, Martin, 65193 Wiesbaden (DE); Stein, Volker, 65205 Wiesbaden (DE)
(74) Vertreter: Daniel, Ulrich W.P.

(57) **Zusammenfassung**

Die Erfindung betrifft eine Multifunktionsbox zur Befestigung, insbesondere zwischen den beiden äußeren Fondsitzen eines Personenkraftwagens, bestehend aus einem von einem wegschwenkbaren Abschlussdeckels verschließbar ersten Behälterteil, dessen Abschlussdeckel im geschlossenen Zustand eine Armauflage bildet und einem zweiten in Fahrtrichtung vorderen Behälterteil zur Aufnahme verschiedener Funktionsteile. Aufgabe ist die Schaffung einer lösbar im Fahrzeug fixierbaren Multifunktionsbox, die schnell und einfach ein- und ausgebaut werden kann und die auf engstem Bauraum dem Nutzer eine große Funktionsvielfalt bietet. Zur Lösung wird vorgeschlagen, dass die Multifunktionsbox (1) in ihrem Bodenbereich einen Verriegelungsmechanismus aufweist, mit dessen Hilfe die Multifunktionsbox (1) schnell lösbar an einer fahrzeugspezifisch gestalteten und mit dem Fahrzeug verbundenen, die Auflage für die Multifunktionsbox (1) bildenden Konsole (2) verbindbar ist.

## Beschreibung

Die Erfindung betrifft eine Multifunktionsbox zur lösbaren Befestigung auf einer spezifischen Auflage im Innenraum eines Fahrzeuges, insbesondere zwischen den beiden äußeren Fondsitzen eines Personenkraftwagens, bestehend aus einem von einem wegschwenkbaren Abschlussdeckel verschließbaren ersten Behälterteil, dessen Abschlussdeckel im geschlossenen Zustand eine Armauflage bildet und einem zweiten in Fahrtrichtung vorderen Behälterteil zur Aufnahme verschiedener Funktionsteile.

Derartige Funktionsboxen sind an sich in vielfältigen Formen und Ausführungen bekannt, sie werden ab Werk oder als Zubehörteil vorwiegend als Mittelkonsolen zwischen den Vordersitzen von Kraftfahrzeugen eingebaut und dienen zur Aufnahme und als Ablage für die unterschiedlichsten Utensilien. Häufig werden diese Boxen zugleich als Mittelarmlehne verwendet, wozu der Abschlussdeckel als Armablage gepolstert ist.

Eine bekannte, am Markt erhältliche Multifunktionsbox der beschriebenen Art ist zum Einbau als Zusatzteil auf dem Mittelplatz der Fondsitzbank von Personenkraftwagen vorgesehen. Ihr Grundaufbau ist etwa L-förmig, wobei ein L-Schenkel vor der Fondsitzbank auf dem Fahrzeugmitteltunnel aufsetzbar ist und der andere als Aufnahmefach und als Mittelarmlehne ausgebildete L-Schenkel auf dem Mittelplatz der Fondsitzbank aufliegt. Die Befestigung der bekannten Multifunktionsbox erfolgt einerseits durch das Aufsetzen auf den Fahrzeugmitteltunnel und andererseits durch Einstecken von zwei Führungslaschen in den Spalt seitlich der fahrzeugseitig vorhandenen Mittelarmlehne. Außerdem wird die Multifunktionsbox mit dem Beckengurt des mittleren Fondsitzplatzes verzurrt. Der Beckengurt wird dazu durch sitzflächenseitige Gurtführungen der Multifunktionsbox gezogen, dann in dem zum Beckengurt zugehörigen Gurtschloss eingerastet und gestrafft. Die bekannte Multifunktionsbox ist in ihrer Formgebung auf die geometrischen Gegebenheiten bestimmter Fahrzeugmodelle abgestimmt.

Eine in die Fondsitzbank eines Fahrzeuges eingebaute abklappbare Multifunktionsbox ist aus der JP 57-80935 bekannt geworden. Im abgeklappten Zustand der Multifunktionskonsole sind die in die Konsole eingebauten Bedienelemente einer Klimaanlage sowie eines Radio-Kassettengeräts zugänglich. Die Multifunktionsbox ist zum schnellen Ausbau bestimmt.

Es wurde auch bereits vorgeschlagen, den Durchladeraum zwischen dem Kofferraum und dem Fondsitz eines Kraftfahrzeugs als Stauraum für den Einbau einer Kühlbox zu nutzen (DE 41 02 646 C2). Weitere Funktionen in Verbindung mit der Kühlbox, z. B. zum Ausbau zu einer Multifunktionsbox, sind bei dieser Lösung kaum möglich, da die Kühlbox weitgehend unzugänglich in dem Durchladeraum angeordnet ist.

Schließlich ist in der DE 198 08 381 A1 eine an unterschiedliche, individuelle Fahrzeugtypen und Fahrzeugmodelle anpassbare Multifunktionsbox beschrieben, die aus einem Baukastensystem mit verschiedenen Befestigungsteilen und Funktionsteilen zusammengesetzt ist. Zur Anpassung an individuelle Benutzererfordernisse ist die Multifunktionsbox mit den verschiedensten Funktionselementen bestückbar. Mit Funktions- und Befestigungsteilen des Baukastensystems kann eine Anpassung sowohl an individuelle Benutzererfordernisse, als auch bestimmte Einbau- und Energieanschlussgegebenheiten eines bestimmten Fahrzeugs mit definierten Energieschnittstellen, Informationsschnittstellen und Befestigungsschnittstellen erfolgen. Die Multifunktionsbox kann je nach den Bedürfnissen eine Mehrzahl von Ablage- und Aufnahmefächern enthalten.

Zur Anpassung an die Auflagefläche der vorbekannten Multifunktionsbox an die Sitzkontur ist eine fahrzeugindividuelle Sitzauflage vorgesehen, deren Unterfläche entsprechen jeweils einer fahrzeugindividuellen Sitzkontur ausgebildet ist, wobei die Oberfläche der Sitzauflage jeweils die Aufstandsflächen für die Multifunktionsbox bildet. Die Sitzauflage soll gemäß dieses Standes der Technik aus elastischem Material, beispielsweise aus Schaumstoffmaterial bestehen.

Für die Befestigung der bekannten Multifunktionsbox ist frontseitig ein zangenförmig ausgebildeter Stützfuß vorgesehen, der mit Klemmschluss den Mitteltunnel übergreift, sowie ein heckseitig fahrzeugindividuell gestalteter Steckfortsatz, der in einen Spalt zwischen dem Sitzpolster und einem angrenzenden Lehnenpolster einer Fondsitzbank einsteckbar ist. Zusätzlich wird die Multifunktionsbox mit dem Mittenbeckengurt auf der Fondsitzbank befestigt. Dazu sind an der Box ein Kasten-Gurtschlossteil und eine Kasten-Zunge angebracht. Die Kasten-Zunge wird zur Festlegung der Multifunktionsbox in das Gurtschloss des Mittenbeckengurts eingesteckt und dieser mit seiner Gurtschlosszunge in das Kasten- Gurtschlossteil eingerastet. Nach Straffung des Mittenbeckengurts soll die Multifunktionskonsole auch bei großen Belastungen, wie sie bei Fahrzeugkollisionen auftreten können, stabil gehalten werden. Neben Ablage- und Aufnahmefächern sind in der bekannten Multifunktionsbox an deren Frontseite Gefäßhalter und ein Kühlfach angebracht.

Aufgabe der vorliegenden Erfindung ist die Schaffung einer lösbar im Fahrzeug fixierbaren Multifunktionsbox, die mit geringem Kostenaufwand herstellbar ist, die schnell und einfach ein- und ausgebaut werden kann und die auf engstem Bauraum dem Nutzer eine große Funktionsvielfalt bietet. Die Befestigung der Multifunktionsbox soll auch großen Belastungen, wie sie bei Fahrzeugkollisionen auftreten können, widerstehen können.

Zur Lösung der Aufgabe wird eine Multifunktionsbox vorgeschlagen, die in ihrem Bodenbereich einen Verriegelungsmechanismus aufweist, mit dessen Hilfe die Multifunktionsbox schnell lösbar an einer fahrzeugspezifisch gestalteten und mit dem Fahrzeug verbundenen, die Auflage für die Multifunktionsbox bildenden Konsole verbindbar ist.

Die erfindungsgemäß gestaltete Multifunktionsbox ist über die Konsole fest mit dem Fahrzeug verriegelbar und kann dennoch leicht nach Lösen der Verriegelung entfernt werden. Somit lässt sich die Multifunktionsbox nutzerspezifisch im Fahrzeug installieren oder, wenn der Platz anderweitig genutzt werden soll, bei Bedarf entfernen. Die Konsole, auf der die Multifunktionsbox aufliegt und verriegelt wird, ist entsprechend dem Verriegelungsmechanismus gestaltet und adaptiert. Sie ist an das jeweilige Fahrzeug angepasst, ein und dieselbe Multifunktionsbox kann aber in verschiedenen Fahrzeugen eingesetzt werden, wenn die Konsole und deren Befestigung entsprechend fahrzeugspezifisch ausgestaltet ist. Die Erfindung ermöglicht, ohne umfangreiche Umbauarbeiten, wie dies beim Stand der Technik gemäß der DE 198 08 381 A1 beispielsweise erforderlich ist, eine Multifunktionsbox mit auf engstem Raum angeordneten Funktionselementen schnell und sicher im Fahrzeug zu installieren und zu verwenden.

Vorzugsweise ist in einer der Seitenwände des vorderen Behälterteil die Verriegelungs-/Entriegelungs-betätigung für den die Multifunktionsbox auf der Konsole haltenden Verriegelungsmechanismus vorgesehen. Durch manuelle Entriegelung, beispielsweise durch Umlegen eines federbetätigten Hebels wird der Verriegelungsmechanismus gelöst, so dass die Multifunktionsbox von der Konsole abgehoben werden kann. Das Verriegeln erfolgt selbsttätig beim Aufsetzen der Multifunktionsbox auf die Konsole, z. B. durch eine Verschiebebewegung der Multifunktionsbox in einer Führung, bei der federbelastete Riegel o.ä. einrasten und die Multifunktionsbox auf der Konsole blockieren. Um zu verhindern, dass die Multifunktionsbox unbeabsichtigt oder unbefugt, z. B. durch Kinder von der Konsole gelöst werden kann, ist die Verriegelungs-/Entriegelungsbetätigung gegen unbefugte Benutzung geschützt ist. Dies kann beispielsweise durch ein Schloss erreicht werden, mit dem der Hebel zur Entriegelung blockiert werden kann.

Zur Überprüfung der ordnungsgemäßen Verriegelung der Multifunktionsbox mit der Konsole ist in einer der Seitenwände der Multifunktionsbox, vorzugsweise in deren vorderem Behälterteil ein Verriegelungsstatus-Sichtfenster eingebracht, in dem beispielsweise durch Farbveränderung (rot/grün) der Verriegelungszustand angezeigt wird.

Um die Nutzung elektrischer und elektronischer Funktionen der Multifunktionsbox zu ermöglichen und trotzdem die Handhabung der Multifunktionsbox beim Einsetzen in das Fahrzeug und beim Entfernen aus dem Fahrzeug zu erleichtern ist nach einem anderen Merkmal der Erfindung vorgesehen, dass in einem nicht sichtbaren Bereich der Multifunktionsbox ein Kontaktstecker ausgebildet ist, der beim Aufsetzen der Multifunktionsbox auf die Konsole mit einer in der Konsole integrierten Schnittstelle eines Elektroanschlusses verbindbar ist.

Nach einem besonders günstigen Merkmal der Erfindung wird ein innerhalb des ersten Behälterteiles ausgebildetes, nach oben offenes Aufnahmefach, beidseitig durch in Fahrzeuglängsrichtung und im wesentlichen parallel zu den Außenwänden verlaufende Innenwände begrenzt, zwischen denen und den Außenwänden jeweils ein schlitzförmiger Zwischenraum ausgebildet wird, in dem jeweils eine an dem Behälterteil fixierbare Tischplatte in einer Ruheposition versenkbar ist. In der außergewöhnlich kompakten Multifunktionsbox sind die Platten zweier Tische untergebracht, die bei Bedarf herausgehoben und in eine dem Nutzer angenehme Position geschwenkt werden können. Werden die Tische nicht genutzt, so können sie innerhalb der Multifunktionsbox in den seitlich gebildeten Aufnahmefächern versenkt werden, ähnlich wie es von Armlehnen an Flugzeugsitzen bekannt ist.

Erfindungsgemäß können die Tischplatten zur Benutzung als Tisch um zwei senkrecht zueinander orientierte horizontale Schwenkachsen aus ihrer vertikal orientierten Ruheposition heraus in ihre im wesentlichen horizontale Tischposition verschwenkt werden. Verschiedene Befestigungsmöglichkeiten und Schwenkbeschläge sind denkbar. Die Anordnung der Tischplatten in der Ruheposition innerhalb der Multifunktionsbox ist besonders raumsparend, so dass es nach einem weiteren Merkmal der Erfindung möglich ist, das Aufnahmefach des ersten Behälterteils als aktives Kühlfach auszubilden.

Es hat sich als günstig erwiesen, nach einem anderen Merkmal der Erfindung das oben offene Kühlfach von dem Boden eines im wesentlichen flachen Ablagefaches dicht zu verschließen, das unabhängig von oder gemeinsam mit dem Abschlussdeckel für das erste Behälterteil aufklappbar ist. Mit Hilfe eines entsprechenden Verschlusssystems kann der Benutzer der Multifunktionsbox entweder das Ablagefach öffnen, um an die darin abgelegten Utensilien zu gelangen, oder bei Betätigung eines anderen Verschlusses das Ablagefach zusammen mit dem Abschlussdeckel öffnen, um das Kühlfach zu erreichen. In diesem Fall verschließt der Abschlussdeckel das Ablagefach so dicht, das keine enthaltenen Utensilien herausfallen können.

Nach einer günstigen Weiterbildung der Multifunktionsbox sind im vorderen Behälterteil Bedienelemente für Audio- und oder Videofunktionen und/oder zur Steuerung der Bordelektronik angeordnet. Ergonomisch günstig sind die Bedienelemente so angeordnet, dass sie bei auf.der Armauflage aufliegendem Arm von der Hand des Bedieners leicht erreichbar sind. Mit den Bedienelementen lassen sich z. B. die Stereo- oder Videoanlage steuern oder die Klimaanlage regeln.

Günstig ist es weiterhin, wenn nach einer Ausgestaltung der Erfindung die Bedienelemente mindestens teilweise von einer in Verlängerung der Armlehne angeordneten, im wesentlichen horizontalen Abdeckplatte verdeckt sind. Die Abdeckplatte schützt die Bedienungselemente und verdeckt den Bereich des vorderen Behälters, der nicht stets zugänglich sein soll. Für die Bedienelemente, die dem Nutzer ständig zur Verfügung stehen sollen, weist die Abdeckplatte mindestens einen Durchgriff zur Betätigung dieser Bedienelemente auf. So kann erfindungsgemäß in der Abdeckplatte beispielsweise die Front eines Audiogerätes ausgespart bleiben.

Für weitere Funktionen der Multifunktionsbox ist erfindungsgemäß vorgesehen, dass die Abdeckplatte zur vollständigen Freigabe der Bedienelemente und/oder anderer in dem vorderen Behälterteil angeordneter Funktionsteile aus ihrer Abdeckposition entfernbar ist. Dadurch können solche Bedienelemente abgedeckt werden, deren Funktion nicht ständig benötigt wird, der Zugriff wird aber problemlos möglich, wenn die Abdeckplatte entfernt wird.

Auch kann die geschlossene Abdeckplatte in einer günstigen Weiterbildung ein Aufnahmefach für Kleinutensilien neben den Bedienelementen abdecken.

Besonders günstig ist es, wenn zum Öffnen der Abdeckplatte diese an Führungsleisten geführt nach oben verschiebbar und in verschiedenen Höhenpositionen arretierbar ist. Teleskopstangen oder Leisten heben dabei die Abdeckplatte etwa senkrecht nach oben und geben den zuvor abgedeckten Raum für den Nutzer frei. Insbesondere wenn nach einem besonderen Merkmal der Erfindung die Abdeckplatte als höhenverstellbare Auflagekonsole mit einer Halterung für einen DVD-Player oder ein anderes elektronisches Gerät ausgebildet ist, bewährt sich die stufenlose Höhenverstellbarkeit der Abdeckplatte, dann nämlich kann das Gerät in einer für den Nutzer angenehmen Höhe positioniert werden.

Vorzugsweise sind im Bereich unterhalb der Abdeckplatte und in dem vorderen Behälterteil Getränkedosenhalter und /oder Ablagefächer herausfahrbar oder herausschwenkbar angeordnet, wie dies an sich bekannt ist. Besonders nützlich ist es, wenn nach einer weiteren Ausgestaltung der Erfindung im unteren Bereich des vorderen Behälterteils ein Abfallbehälter vorgesehen ist, der beispielsweise durch Herausschwenken einer Abdeckklappe oder Herausziehen eines Schubfaches zugänglich ist.

Weiterhin hat es sich bewährt, wenn in dem vorderen Behälterteil mindestens eine von außen zugängige Bordstrom-Steckdosen vorgesehen ist. An eine solche Steckdose lassen sich beliebige Verbraucher anschließen, wie z. B. die Adapter von Spielgeräten, mobilen CD-Playern oder Kassettengeräten. Auch können Leselampen o. ä. angeschlossen werden.

Die Steckdosen erhalten Strom über fest in der Multifunktionsbox verdrahtete Leitungen, die geschaltet werden, sobald die Multifunktionsbox durch Aufsetzen auf die Konsole mit der integrierten Schnittstelle des Elektroanschlusses verbunden wird.

Da die in der Multifunktionsbox integrierten elektrischen und elektronischen Geräte und Elemente Zu- und Abluft benötigen, ist nach einem weiteren Merkmal der Erfindung vorgesehen, dass im unteren Bereich des ersten Behälterteiles ein sich in Fahrzeuglängsrichtung erstreckender Zuluftkanal verläuft, durch den Frisch-/und Kühlluft von der der Sitzlehne nahen Zuluftkanalöffnung zum vorderen Teil der Multifunktionsbox geführt wird.

Zur Unterstützung der Luftführung kann günstigerweise im Bereich der Zuluftkanalöffnung ein Ventilator eingesetzt werden.

Die Multifunktionsbox weist zur lösbaren und verriegelbaren Verbindung mit einer Konsole einen Verriegelungsmechanismus auf. Dieser Mechanismus ist so ausgebildet, dass eine einfache Montage und Demontage der Multifunktionsbox auf der Konsole gewährleistet ist. Hierzu ist es vorteilhaft, dass der Verriegelungsmechanismus mindestens eine nach Art eines Hakens ausgebildete, in Richtung Fahrzeugboden weisende Verriegelungseinheit zum Eingreifen in eine korrespondierende Ausnehmung einer Konsole aufweist. Die Verriegelungseinheit hintergreift dabei einen korrespondierenden Bereich der Konsole. Die Montage erfolgt dabei vorteilhafter Weise durch ein im Wesentlichen vertikales Aufsetzen der Multifunktionsbox auf die Konsole, so dass der Verriegelungsmechanismus mit einem entsprechenden Bereich der Konsole zusammenwirken kann. Zur Sicherung der Multifunktionsbox gegen Lösen, wird die Multifunktionsbox nach dem vertikalen Aufsetzen im Wesentlichen horizontal in Richtung Fahrzeugheck bewegt. Hierdurch wird eine crash-sichere Verbindung zwischen Multifunktionsbox und Konsole realisiert.

Um eine entsprechend hochfeste mechanische Verbindung zu realisieren, die auch im Falle eines Unfalls, Zusammenstoßes oder Crash zuverlässig funktioniert, ist es vorteilhaft, dass der Verriegelungsmechanismus vier Verriegelungseinheiten aufweist, wobei je eine Verriegelungseinheit in einem Eckbereich der im Wesentlichen rechteckigen, Richtung Fahrzeugboden weisenden Unterseite angeordnet ist. Auf diese Weise lassen sich die bei einem Crash auftretenden Kräfte optimal ableiten, so dass die Multifunktionsbox sicher auf der Konsole befestigt ist.

Zu sicheren Verbindung der Multifunktionsbox mit der Konsole sieht eine die Erfindung verbessernde Maßnahme vor, dass der hakenartigen Verriegelungsmechanismus einen horizontalen Teil und einen vertikalen Teil aufweist, wobei der horizontale Teil über den vertikalen Teil mit der Unterseite der Multifunktionsbox verbunden ist, so dass zwischen dem horizontalen Teil und der Unterseite der Multifunktionsbox ein nutähnlicher Raum gebildet ist, in welchem eine entsprechende Ausformung der Konsole aufnehmbar ist, so dass eine crash-sichere Verbindung zwischen Konsole und Multifunktionsbox realisierbar ist. Durch die Ausformung lässt sich eine hochfeste Verbindung von Multifunktionsbox und Konsole auf kleinem Bauraum realisieren, wobei die Verbindung nicht über die Multifunktionsbox-Konsole-Einheit herausragt und so keine Angriffspunkte für ein unbeabsichtigtes Lösen der Multifunktionsbox von der Konsole bereitstellt.

Die Verbindungseinheit sichert die Multifunktionsbox im Wesentlichen gegen eine vertikale Bewegung. Zur Vermeidung einer im Wesentlichen horizontalen Bewegung ist es vorteilhaft, dass der Verriegelungsmechanismus eine Einrasteinheit aufweist, welche mit der Verriegelungs-/Entriegelungsbetätigung verbunden ist, wobei die Einrasteinheit ein ungewolltes Lösen der Multifunktionsbox von der Konsole verhindert. Hierdurch ist eine zusätzliche Sicherung realisiert, welche nur über eine Verriegelungs-/Entriegelungsbetätigung betätigbar ist.

Ein Ausführungsbeispiel der Erfindung ist in der Zeichnung dargestellt und wird nachfolgend beschrieben. Es zeigt:
- Fig. 1: die erfindungsgemäße Multifunktionsbox mit Konsole im geschlossenen Einbauzustand,
- Fig. 2: die Multifunktionsbox nach Figur 1 mit geöffnetem Abschlussdeckel,
- Fig. 3: eine erfindungsgemäße Multifunktionsbox mit ausgefahrener Abdeckplatte und DVD-Player und
- Fig. 4: die Multifunktionsbox nach Figur 3 mit ausgeklapptem Tisch und ausgefahrener Abdeckplatte.

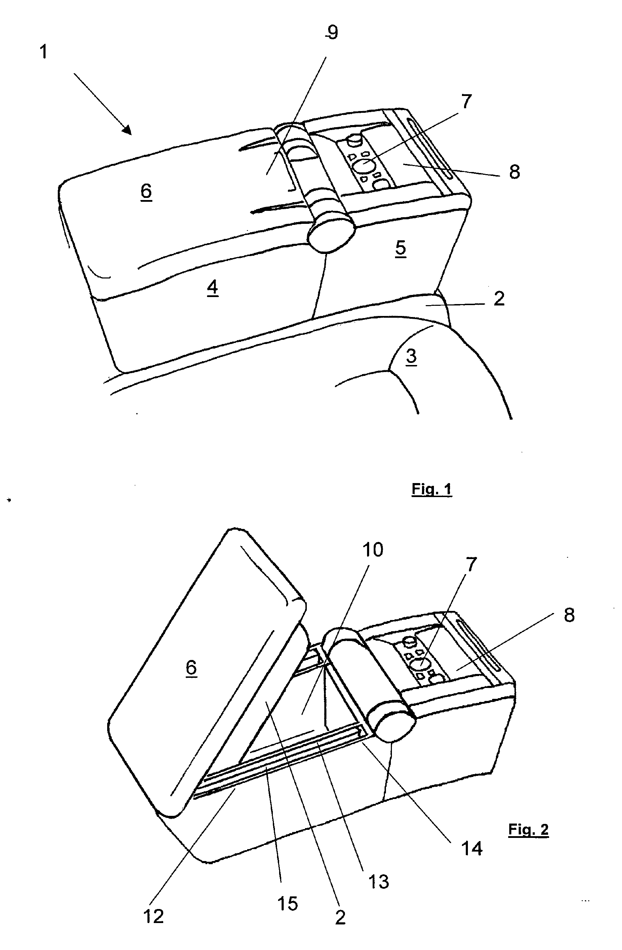

In der Zeichnungsfigur 1 ist in schematischer Darstellung die erfindungsgemäße Multifunktionsbox gezeigt, die insgesamt mit 1 bezeichnet ist. Die Multifunktionsbox 1 ist auf der als Auflage dienenden Konsole 2 mittels eines Verriegelungsmechanismus (in der Zeichnung nicht erkennbaren) schnell lösbar befestigt; die Konsole ihrerseits ist fest mit dem Fahrzeug verbunden und zwar, wie im Ausführungsbeispiel erkennbar, zwischen den beiden äußeren Fondsitzen eines Personenkraftwagens. In Figur 1 ist, bei 3 angedeutet, der in Fahrtrichtung rechte Fondsitz teilweise dargestellt.

Der Verriegelungsmechanismus (nicht dargestellt) weist vier L-förmig ausgebildete Verriegelungseinheiten auf, die nach Art eines Hakens ausgeformt sind. Die Verriegelungseinheiten sind dabei in den Eckbereichen der Unterseite der Multifunktionsbox 1 angeordnet, so dass diese bei einer Verbindung mit der Konsole 2 von außen nicht zugänglich sind. Die Verriegelungseinheit wirkt mit entsprechend ausgeformten Ausnehmungen der Konsole 2 zusammen. Dabei erfolgt die Montage der Multifunktionsbox 1 im Wesentlichen in zwei Schritten:
1. vertikales Aufsetzen der Multifunktionsbox 1 auf der Konsole 2, so dass die Verriegelungseinheiten in eine entsprechend ausgeformte Ausnehmung der Konsole 2 ragen und
2. horizontales Verschieben der Multifunktionsbox 1 in Richtung Fahrzeugheck zum Eingriff der Verriegelungseinheit mit einer entsprechend ausgeformten Ausnehmung der Konsole 2 bis zu einer Endposition. Bei Erreichen der Endposition erfolgt ein Einrasten wodurch eine Verriegelung der Multifunktionsbox erfolgt. Das Einrasten wird durch eine Einrasteinheit (nicht dargestellt) realisiert. Diese bewirkt ein Einrasten der Multifunktionsbox 1 in dem diese bei Erreichen der Endposition der Multifunktionsbox 1 auf der Konsole 2 mit einer entsprechend ausgebildeten Ausformung der Konsole 2 zusammenwirkt.

Die Multifunktionsbox 1 ist, wie ebenfalls in Figur 1 erkennbar, in einen ersten hinteren Behälterteil 5 und einen zweiten vorderen Behälterteil 6 unterteilt, wenngleich beide Behälterteile baueinheitlich miteinander verbunden sind. Der erste Behälterteil ist durch einen zu öffnenden Abschlussdeckel 6 verschließbar, der im dargestellten geschlossenen Zustand eine Armauflage für den auf den Fondsitzen mitfahrenden Passagier bildet. Die Armauflage ist in bekannter Weise gepolstert und nach hinten aufklappbar. Ein konventioneller Verschlussgriff des Abschlussdeckels 6 ist bei 9 angedeutet. Im vorderen Behälterteil sind mehrere Funktionsteile untergebracht, von denen in der Zeichnungsfigur 1 die Bedienelemente 7 für Audio- und oder Videofunktionen erkennbar sind. Die Bedienelemente 7 sind teilweise von einer in Verlängerung der Armlehne angeordneten, im wesentlichen horizontalen entfernbaren Abdeckplatte 8 verdeckt, die gleichzeitig ein im vorderem Behälterteil vorgesehenes Fach für Kleinutensilien verschließt.

In Figur 2 ist die Multifunktionsbox 1 mit geöffnetem Abschlussdeckel 6 dargestellt. Erkennbar ist ein geräumiges Staufach, das im Beispiel als aktive Kühlbox 10 gestaltet ist. Dicht verschlossen wird die Kühlbox 10 bei geschlossenem Abschlussdeckel 6 durch ein im Wesentlichen flaches Ablagefach 11, welches in den Abschlussdeckel integriert und unter diesem angebracht ist, und welches unabhängig von oder gemeinsam mit dem Abschlussdeckel 6 des ersten Behälterteils 4 aufklappbar ist. Das bedeutet, dass das Ablagefach 11 bei geöffnetem Abschlussdeckel 6 die Kühlbox 10 verschließ, zum Öffnen der Kühlbox 10 wird das Ablagefach zusammen mit dem das Ablagefach fest verschließenden Abschlussdeckel aufgeschwenkt, so dass keine Utensilien herausfallen können. Dieser Zustand ist in der Zeichnungsfigur 2 dargestellt.

Wie Figur 2 weiter erkennen lässt, wird die Kühlbox 10 beidseitig durch in Fahrzeuglängsrichtung und im wesentlichen parallel zu den Außenwänden 12 des ersten Behälterteils 4 verlaufende Innenwände 13 begrenzt, zwischen denen und den Außenwänden 12 jeweils ein schlitzförmiger Zwischenraum 14 ausgebildet ist, in dem jeweils eine bei Benutzung an dem Behälterteil 4 fixierbare Tischplatte 15 in einer senkrechten Ruheposition versenkbar ist. Die Tischplatte 15 ist mittels eines (nicht dargestellten) Mechanismus um zwei senkrecht zueinander orientierte horizontale Schwenkachsen aus ihrer vertikal orientierten Ruheposition heraus in ihre im wesentlichen horizontale Tischposition verschwenkbar, wie in Figur 4 dargestellt ist.

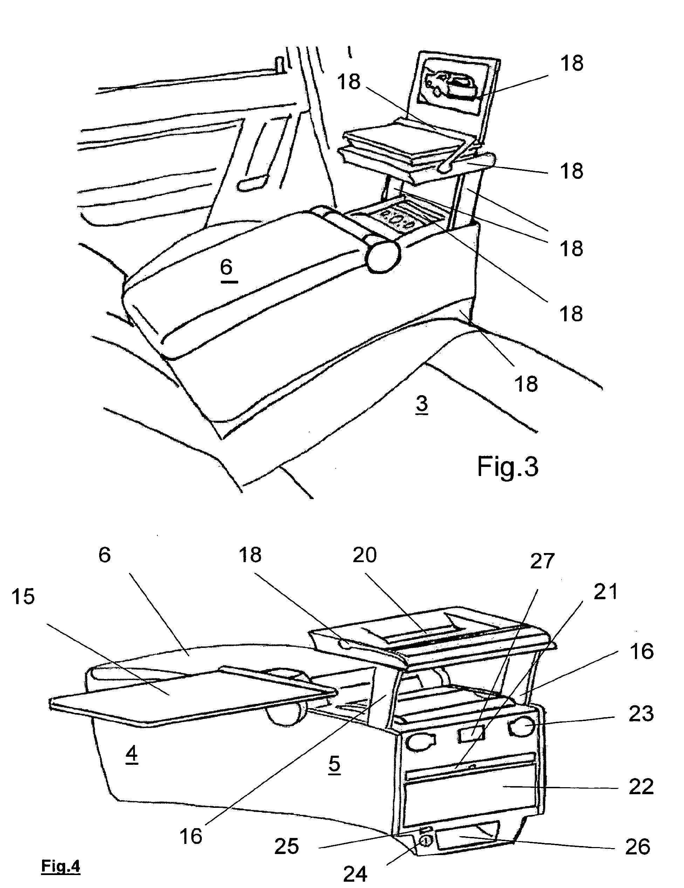

Wie bereits beschrieben, sind im vorderen Behälterteil 5 Bedienelemente 7 für Audio- und oder Videofunktionen und/oder zur Steuerung der Bordelektronik angeordnet, die mindestens teilweise von einer in Verlängerung der von dem Abschlussdeckel 6 gebildeten Armlehne angeordneten Abdeckplatte 8 verdeckt sind. Wie in Figur 3 erkennbar, ist diese Abdeckplatte 8 nach oben abhebbar, wobei sie an Führungsleisten 16 beidseitig geführt bzw. gehalten ist. Die nach oben bewegte Abdeckplatte 8 gibt die Bedienelemente vollständig frei und öffnet ein Aufnahmefach für Kleinutensilien oder auch ein Display 17 zur Anzeige verschiedener Funktionen. Wie in Figur 3 weiter erkennbar, bildet die Abdeckplatte 8 gleichzeitig eine höhenverstellbare Auflagekonsole mit einer Halterung 18 für einen DVD-Player 19 oder ein anderes elektronisches Gerät. Das Gerät kann durch die stufenlose Höhenverstellung der die Konsole bildenden Abdeckplatte 8 in eine zum Ablesen, Anschauen oder Bedienen günstige Position verfahren und dort festgelegt werden. Dazu ist eine Verriegelung vorgesehen, mit der die Abdeckplatte 8 in ihrer jeweiligen Stellung fixiert werden kann.

In Figur 4 ist erkennbar, dass die Abdeckplatte 8 eine Durchgriffsöffnung 20 aufweist, die im geschlossenen Zustand der Abdeckplatte (Figur 1 und 2) einen Zugriff auf die Bedienungselemente 7 ermöglicht. Gleiche Teile sind in allen Figuren gleich bezeichnet. Figur 4 zeigt auch die vordere, in Fahrtrichtung gerichtet Seite der Multifunktionsbox 1. Erkennbar sind die Abdeckungen des in diesem vorderen Behälterteil 5 angeordneten Getränkehalters 21 und des Abfallfaches 22. Der Getränkehalter 21 ist in bekannter Weise schubladenförmig ausfahrbar gestaltet und weist Aufnahmen für zwei Getränkedosen auf. Das Abfallfach 22 ist als Schublade ausgebildet, die in Fahrtrichtung ausziehbar ist.

Ebenfalls in der Frontseite der Multifunktionsbox 1 sind zwei Steckdosen 23 für den Bordstrom eingesetzt, die durch Klappdeckel verschlossen sind. Hier lassen sich die Stecker externer Verbraucher einstecken, z.B. Spielgeräteadapter, Lampen o.ä..

Bei 24 ist das Schloss dargestellt, mit dem der Verriegelungsmechanismus der Multifunktionsbox 1 auf der Konsole 2 gegen unbefugte Benutzung gesichert werden kann. Nur mit einem Schlüssel, bei dem es sich um den Fahrzeugschlüssel handeln kann, kann der Verriegelungsmechanismus gelöst werden, die Verriegelungsstellung kann dabei in einem Sichtfenster 25 erkannt werden, das ebenfalls in der Vorderseite der Multifunktionsbox 1 eingebracht ist, und die Verschlussstellung farbig anzeigt. Die Verriegelungs-/Entriegelungsbetätigung ist mit der Einrasteinheit verbunden.

Nicht erkennbar in der Zeichnung ist ein im unteren Bereich des ersten Behälterteiles 4 in Fahrzeuglängsrichtung verlaufender Zuluftkanal, durch den Frisch- und Kühlluft zwischen der der Sitzlehne nahen Zuluftkanalöffnung zum vorderen Teil der Multifunktionsbox 1 geführt wird. Ein Ventilator kann den Luftstrom unterstützen. Erkennbar in Figur 4 ist die Griffmulde 26 im vorderen Bereich der Multifunktionsbox, mit deren Hilfe der Aus- und Einbau der Multifunktionsbox 1 von der bzw. auf die Konsole 2 ergonomisch günstig erfolgen kann. Mit 27 ist ein Verriegelungsknopf bezeichnet, mit dem die Abdeckplatte 8 in ihrer jeweiligen Höhenstellung fixiert werden kann.

Schließlich ist in der Figur 4 der an der Multifunktionskonsole befestigter Tisch dargestellt, dessen Tischplatte zuvor aus dem schlitzförmigen Zwischenraum 14 zwischen der äußeren Behälterwand 12 und der inneren Behälterwand 13 herausgehoben bzw. geschwenkt wurde. Ein gleicher Tisch ist auf der gegenüberliegenden Seite aus der Multifunktionskonsole herausnehmbar, nachdem jeweils der Abschlussdeckel 6 zuvor geöffnet wurde.

### Bezugszeichenliste

- 1: Multifunktionsbox
- 2: Konsole
- 3: rechter Fondsitz
- 4: erster Behälterteil
- 5: zweiter Behälterteil
- 6: Abschlussdeckel
- 7: Bedienelemente
- 8: Abdeckplatte
- 9: Verschlussgriff
- 10: Kühlbox
- 11: Ablagefach
- 12: äußere Behälterwand
- 13: innere Behälterwand
- 14: schlitzförmiger Zwischenraum
- 15: Tischplatte
- 16: Führungsleiste
- 17: Display
- 18: Halterung
- 19: DVD-Player
- 20: Durchgriffsöffnung
- 21: Getränkehalter
- 22: Abfallbehälter
- 23: Steckdose
- 24: Schloss
- 25: Sichtfenster
- 26: Griffmulde
- 27: Verriegelungsknopf

## Patentansprüche

1. Multifunktionsbox (1) zur lösbaren Befestigung auf einer spezifischen Auflage im Innenraum eines Fahrzeuges, insbesondere zwischen den beiden äußeren Fondsitzen (3) eines Personenkraftwagens, bestehend aus einem von einem wegschwenkbaren Abschlussdeckel (6) verschließbaren ersten Behälterteil (4), dessen Abschlussdeckel (6) im geschlossenen Zustand eine Armauflage bildet und einem zweiten in Fahrtrichtung vorderen Behälterteil (5) zur Aufnahme verschiedener Funktionsteile, **dadurch gekennzeichnet, dass** die Multifunktionsbox (1) in ihrem Bodenbereich einen Verriegelungsmechanismus aufweist, mit dessen Hilfe die Multifunktionsbox (1) schnell lösbar an einer fahrzeugspezifisch gestalteten und mit dem Fahrzeug verbundenen, die Auflage für die Multifunktionsbox (1) bildenden Konsole (2) verbindbar ist.

2. Multifunktionsbox (1) nach Anspruch 1, **dadurch gekennzeichnet, dass** in einer der Seitenwände des vorderen Behälterteils die Verriegelungs-/Entriegelungsbetätigung (24) für den die Multifunktionsbox (1) auf der Konsole (2) haltenden Verriegelungsmechanismus vorgesehen ist.

3. Multifunktionsbox (1) nach Anspruch 1 und 2, **dadurch gekennzeichnet, dass** die Verriegelungs-/Entriegelungsbetätigung (24) gegen unbefugte Benutzung geschützt ist.

4. Multifunktionsbox (1) nach Anspruch 1 bis 3, **dadurch gekennzeichnet, dass** in einer der Seitenwände des Behälterteiles (4) oder seines vorderen Behälterteils (5) ein Verriegelungsstatus-Sichtfenster (25) eingebracht ist.

5. Multifunktionsbox (1) nach Anspruch 1 bis 4, **dadurch gekennzeichnet, dass** in einem nicht sichtbaren Bereich der Multifunktionsbox (1) ein Kontaktstecker ausgebildet ist, der beim Aufsetzen der Multifunktionsbox (1) auf die Konsole (2) mit einer in der Konsole (2) integrierten Schnittstelle eines Elektroanschlusses verbindbar ist.

6. Multifunktionsbox (1) nach Anspruch 1, **dadurch gekennzeichnet, dass** ein innerhalb des ersten Behälterteiles (4) ausgebildetes, nach oben offenes Aufnahmefach (10), beidseitig durch in Fahrzeuglängsrichtung und im wesentlichen parallel zu den Außenwänden (12) verlaufende Innenwände (13) begrenzt wird, zwischen denen und den Außenwänden (12) jeweils ein schlitzförmiger Zwischenraum (14) ausgebildet wird, in dem jeweils eine an dem Behälterteil (4 oder 5) fixierbare Tischplatte (15) in einer Ruheposition versenkbar ist.

7. Multifunktionsbox (1) nach Anspruch 6, **dadurch gekennzeichnet, dass** die Tischplatten (15) um zwei senkrecht zueinander orientierte horizontale Schwenkachsen aus ihrer vertikal orientierten Ruheposition heraus in ihre im wesentlichen horizontale Tischposition verschwenkbar sind.

8. Multifunktionsbox (1) nach Anspruch 6, **dadurch gekennzeichnet, dass** das Aufnahmefach (10) des ersten Behälterteils als aktives Kühlfach ausgebildet ist.

9. Multifunktionsbox (1) nach Anspruch 8, **dadurch gekennzeichnet, dass** das oben offene Kühlfach (10) von dem Boden eines im wesentlichen flachen Ablagefaches (11) dicht verschließbar ist, das unabhängig von oder gemeinsam mit dem Abschlussdeckel (6) für das erste Behälterteil (4) aufklappbar ist.

10. Multifunktionsbox (1) nach Anspruch 1, **dadurch gekennzeichnet, dass** im vorderen Behälterteil (5) Bedienelemente (7) für Audio- und oder Videofunktionen und/oder zur Steuerung der Bordelektronik angeordnet sind.

11. Multifunktionsbox (1) nach Anspruch 10, **dadurch gekennzeichnet, dass**, die Bedienelemente (7) mindestens teilweise von einer in Verlängerung der Armlehne (Abschlussdeckel 6) angeordneten, im wesentlichen horizontalen Abdeckplatte (8) verdeckt sind.

12. Multifunktionsbox (1) nach Anspruch 11, **dadurch gekennzeichnet, dass** die Abdeckplatte (8) mindestens einen Durchgriff (20) zur Betätigung der Bedienelemente (7) aufweist.

13. Multifunktionsbox (1) nach Anspruch 11, **dadurch gekennzeichnet, dass** die Abdeckplatte (8) die Front eines Audiogerätes ausspart.

14. Multifunktionsbox (1) nach Anspruch 11, **dadurch gekennzeichnet, dass** die Abdeckplatte (8) zur vollständigen Freigabe der Bedienelemente (7) und/oder anderer in dem vorderen Behälterteil (5) angeordneter Funktionsteile aus ihrer Abdeckposition entfernbar ist.

15. Multifunktionsbox (1) nach Anspruch 11 bis 14, **dadurch gekennzeichnet, dass** die geschlossene Abdeckplatte (8) ein Aufnahmefach für Kleinutensilien abdeckt.

16. Multifunktionsbox (1) nach Anspruch 11 bis 15, **dadurch gekennzeichnet, dass** die Abdeckplatte (8) an Führungsleisten (16) geführt nach oben verschiebbar und in verschiedenen Höhenpositionen arretierbar ist.

17. Multifunktionsbox (1) nach einem der Ansprüche 11 bis 16, **dadurch gekennzeichnet, dass** die Abdeckplatte (8) als höhenverstellbare Auflagekonsole mit einer Halterung für einen DVD-Player (19) oder ein anderes elektronisches Gerät ausgebildet ist.

18. Multifunktionsbox (1) nach einem der Ansprüche 1 bis 17, **dadurch gekennzeichnet, dass** in dem vorderen Behälterteil (5) Getränkedosenhalter (21) und /oder Ablagefächer (22) herausfahrbar oder -schwenkbar angeordnet sind.

19. Multifunktionsbox (1) nach einem der Ansprüche 1 bis 18, **dadurch gekennzeichnet, dass** im unteren Bereich des vorderen Behälterteils (5) ein Abfallbehälter (22) vorgesehen ist.

20. Multifunktionsbox (1) nach einem der Ansprüche 1 bis 19, **dadurch gekennzeichnet, dass** in dem vorderen Behälterteil (5) mindestens eine von außen zugängige Bordstrom-Steckdosen (23) vorgesehen ist.

21. Multifunktionsbox (1) nach einem der Ansprüche 1 bis 20, **dadurch gekennzeichnet, dass** im unteren Bereich des ersten Behälterteiles (4) ein sich in Fahrzeuglängsrichtung erstreckender Zuluftkanal verläuft, durch den Frisch-/und Kühlluft zwischen der der Sitzlehne nahen Zuluftkanalöffnung zum vorderen Teil der Multifunktionsbox (1) geführt wird.

22. Multifunktionsbox (1) nach Anspruch 20, **dadurch gekennzeichnet, dass** im Bereich der Zuluftkanalöffnung ein Ventilator angeordnet ist.

23. Multifunktionsbox (1) nach einem der vorherigen Ansprüche, **dadurch gekennzeichnet, dass** der Verriegelungsmechanismus mindestens eine nach Art eines Hakens ausgebildete, in Richtung Fahrzeugboden weisende Verriegelungseinheit zum Eingreifen in eine korrespondierende Ausnehmung einer Konsole (2) aufweist.

24. Multifunktionsbox (1) nach einem der vorherigen Ansprüche, **dadurch gekennzeichnet, dass** der Verriegelungsmechanismus vier Verriegelungseinheiten aufweist, wobei je eine Verriegelungseinheit in einem Eckbereich der im Wesentlichen rechteckigen, Richtung Fahrzeügboden weisenden Unterseite angeordnet ist.

25. Multifunktionsbox (1) nach einem der vorherigen Ansprüche, **dadurch gekennzeichnet, dass** der hakenartigen Verriegelungsmechanismus einen horizontalen Teil und einen vertikalen Teil aufweist, wobei der horizontale Teil über den vertikalen Teil mit der Unterseite der Multifunktionsbox verbunden ist, so dass zwischen dem horizontalen Teil und der Unterseite der Multifunktionsbox ein nutähnlicher Raum gebildet ist, in welchem eine entsprechende Ausformung der Konsole (2) aufnehmbar ist, so dass eine crash-sichere Verbindung zwischen Konsole (2) und Multifunktionsbox (1) realisierbar ist.

26. Multifunktionsbox (1) nach einem der vorherigen Ansprüche, **dadurch gekennzeichnet, dass** der Verriegelungsmechanismus eine Einrasteinheit aufweist, welche mit der Verriegelungs-/Entriegelungsbetätigung (24) verbunden ist, wobei die Einrasteinheit ein ungewolltes Lösen der Multifunktionsbox (1) von der Konsole (2) verhindert.
